# NEUE EUROPÄISCHE PATENTSCHRIFT

(11) **EP 2 103 379 B2**
(45) Veröffentlichungstag und Bekanntmachung des Hinweises auf die Entscheidung über den Einspruch: **13.01.2021**
(45) Hinweis auf die Patenterteilung: 16.11.2016
(21) Anmeldenummer: 09155280.2
(22) Anmeldetag: 16.03.2009
(51) Int. Cl.: B23Q 17/09, G01L 5/00, B23B 31/02

(54) **Spannfutter-integriertes Kraftmesssystem**
Chuck-integrated force measurement system
Système de mesure de force intégré au mandrin

(30) Priorität: 19.03.2008 DE 102008015005
(43) Veröffentlichungstag der Anmeldung: 23.09.2009
(73) Patentinhaber: pro-micron GmbH, 87600 Kaufbeuren (DE)
(72) Erfinder: Eckstein, Martin, 82178, Puchheim (DE); Breitkopf, Günter, 80638, München (DE); Huber, Richard, 87600, Kaufbeuern (DE); Jäger, Thomas, 79865, Grafenhausen (DE)
(74) Vertreter: Charrier Rapp & Liebau

(56) Entgegenhaltungen:
- EP-A- 1 323 495
- WO-A2-03/023327
- DE-A1- 3 818 449
- DE-A1- 4 410 414
- DE-A1- 10 222 008
- DE-U1- 9 014 037
- DE-U1-202007 009 465
- US-A1- 2007 012 121
- US-B2- 7 328 752
- Sauer, Ulrich: "Alles unter Kontrolle", Maschinenmarkt. Das Industrie-Magazin, 22 April 2003 (2003-04-22),
- Artis GmbH: "Werkzeug- und Prozessüberwachung mit CTM Computer integrated Tool Monitoring", , May 2000 (2000-05),
- Produktdatenblatt EMUGE Spanntechnik - Werkzeugüberwachungssystem DDU4, August 2004
- Produktdatenblatt EMUGE Spanntechnik - Werkzeugüberwachungssystem Type ICS, Juni 1996
- Präsentation 'Prozessüberwachung bei der Bohrungsbearbeitung in U-dimet 720, Ti 6242 und Inconel 718' der MTU Aero Engines GmbH, München, 05.03.2004
- Produktdatenblatt EMUGE Spanntechnik - Werkzeugüberwachungssystem IR und ICS, 08-1998
- Anonym: "Betriebsanleitung Kistler - Rotierendes Schnittkraft-Dynamometer Typ 9124B", , 1998,

## Beschreibung

Die vorliegende Erfindung betrifft ein Spannfutter-integriertes Kraftmesssystem gemäß dem Oberbegriff des Patentanspruchs 1.

Bei Werkzeugmaschinen, z.B. NC-Maschinen, bildet sich der Ablauf eines Bearbeitungsprozesses, beispielsweise der spanende Abtrag von Werkstoff beim Drehen, Bohren, Fräsen, Räumen etc. im zeitlichen Ablauf bestimmter physikalischer Größen wie der Schnitt- und/oder Vorschubkraft ab. Durch Erfassung und Auswertung dieser Größen kann dann der Prozess im Hinblick auf die Qualität des Ergebnisses überwacht werden (intelligente Auswertung von Messsignalen). Ebenso ist es möglich, auf dieser Basis den Prozess durch bestimmte variierbare Prozessparameter, wie beispielsweise Drehzahl, Vorschubkraft bzw. -geschwindigkeit etc. nach bestimmten Kriterien, z.B. Bearbeitungsqualität, Bearbeitungszeit, etc. sowie nach einer Kombination von solchen Kriterien zu steuern.

Hierbei gilt als eine besonders wichtige, Informations-tragende physikalische Größe die Kraft, die am Bearbeitungspunkt (oder Schnittkante) vom Werkzeug auf das Werkstück ausgeübt wird. Es besteht ein Bedarf, diese Schneidkraft auch bei jenen Bearbeitungsverfahren mit drehender Spindel (z.B. Bohren, Fräsen etc.) möglichst genau nach Größe und Richtung zu kennen. Von primärer Wichtigkeit ist dabei die Größe der Kraft - daneben ist auch die resultierende Richtung im raumfesten Koordinatensystem von Interesse.

Die grundsätzliche Schwierigkeit liegt nunmehr in der messtechnischen Erfassung dieser Kraft. Sie entsteht am Schneideeingriffspunkt mit einer momentanen Größe und Richtung, welche von der Schneidengeometrie und ihrer Führung relativ zur Werkstücksoberfläche und dessen Kontur abhängen.

Zur vollständigen Erfassung der resultierenden Kraft ist diese in drei Richtungen im raumfesten Koordinatensystem zu bestimmen. Dies kann theoretisch aufgrund der physikalischen Gesetzmäßigkeit "actio = reactio" mit entsprechenden Messwertnehmern entweder am Werkstück oder am Werkzeug erfolgen. Es ergeben sich in der Praxis jedoch deutliche Messergebnisunterschiede:
Die Aufnahme am Werkstück ist technisch einfach umzusetzen, jedoch in der Produktionspraxis wegen der Notwendigkeit, das Werkstück auf einem speziellen Messtisch mit installierten Kraftaufnehmern zu spannen, nicht ökonomisch anwendbar. Darüber hinaus wirkt insbesondere bei dynamischen Kräften einerseits die Masse des Werkstückes wie ein Tiefpassfilter, der den Signalgehalt der Höheren Frequenzen dämpft und andererseits verfälscht die notwendigerweise endliche Masse des Messtischs das Signal. Diese Effekte begrenzen je nach der Größe der beteiligten Massen die Aussagefähigkeit der Messung auf ein bestimmtes Frequenzband oder lassen sogar eine direkte Auswertung ohne aufwändige Modelanalyse der gesamten Anordnung nicht zu.

Wird zur Vermeidung der vorstehenden Probleme die Kraftmessung am Werkzeug durchgeführt, ergeben sich die folgenden Schwierigkeiten:
Eine direkte Messung, z.B. durch Kraftaufnehmer an der Werkzeugschneide setzt entsprechende konstruktive Maßnahmen an der Werkzeugmaschine voraus. So ist ein entsprechender Einbauraum für die Messtechnik vorzusehen, der bei konventionellen Bearbeitungsmaschinen nicht ausreichend zur Verfügung steht. Diese Messart ist daher derzeit höchstens in sehr speziellen Laboraufbauten zu finden, die nur unter stark einschränkenden Bedingungen eingesetzt werden könnten und daher nur von geringer praktischer Bedeutung sind.

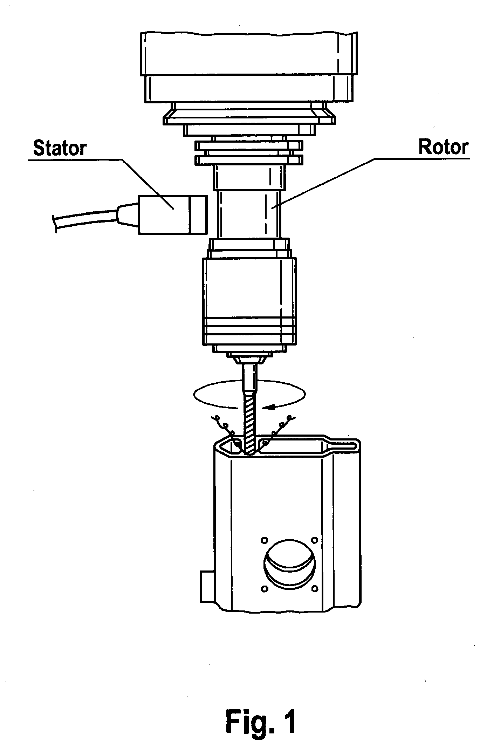

So ist aus dem Stand der Technik gemäß der anliegenden Fig. 1 ein sogenanntes Werkzeugdrehmoment-Erfassungssystem für Bohrmaschinen bekannt, das aus einem an der Spindel einer Werkzeughalterung befestigbaren Rotor und einem Stator besteht, der berührungslos um den Rotor herum angeordnet ist. Der Rotor misst das in das rotierende Bohrwerkzeug eingeleitete Drehmoment und überträgt die Messwerte berührungslos zum Stator. Darüber hinaus ist es optional möglich, zusätzlich die Vorschubkraft an der Werkzeughalterungsspindel abzugreifen.

Wie aus der Fig. 1 zu ersehen ist, befindet sich der Rotor an der Abtriebsspindel der Werkzeugmaschine oberhalb der Werkzeug-Spannfutters. Es ist also auch bei diesem Stand der Technik erforderlich, einen entsprechenden Bauraum für das Anbringen des Rotors bereitzustellen.

Des weiteren ist aus der DE 90 14 037 U1, die ein Spannfutter-integriertes Kraftmessssytem mit den Merkmalen des Oberbegriffs von Anspruch 1 offenbart, ein Gewindeschneid- und Bohrfutter bekannt, das sich aus drei separaten Hauptkomponenten, nämlich einem Futterschaft, einer Messeinrichtung und einem Futterkörper zusammensetzt. Zur Messung von Kräften und Momenten, die bei der Werkstückbearbeitung auftreten, wird die Messeinrichtung als kraftübertragendes Verbindungsglied zwischen Futterschaft und Futterkörper eingesetzt. Falls keine Messung durchgeführt werden soll, kann der Futterkörper auch direkt mit dem Futterschaft verbunden werden. Nachteile dieser Lösung sind eine relativ lange Bauform, die durch die lineare Anordnung der drei Hauptkomponenten bedingt ist, der Aufwand zur Realisierung der mechanischen Schnittstellen zwischen den Hauptkomponenten und die potentielle Beeinträchtigung der Steifigkeit der gesamten Anordnung durch diese Schnittstellen.

Angesichts dieses Standes der Technik ist es die Aufgabe der vorliegenden Erfindung, ein Kraftmesssystem insbesondere für Werkzeugmaschinen mit drehender Spindel bereit zu stellen, welches bei einfachem und kompaktem Aufbau eine erhöhte Funktionalität wie beispielsweise eine umfassendere Verwendbarkeit und genauere Messergebnisse bietet.

Diese Aufgabe wird durch ein Spannfutter-integriertes Kraftmesssystem mit den Merkmalen des Patentanspruchs 1 gelöst. Der Kern der Erfindung besteht demzufolge darin, zumindest einen Messaufnehmer in Form eines Dehnungssensors an einer Werkzeughalterung einer Werkzeugmaschine mit einer drehenden Spindel zu platzieren und hierfür eine Messnabe vorzusehen, die als ein Adapter- oder Zwischenstück in ein Spannfutter der Spindel der Werkzeugmaschine einsetzbar ist, wobei der zumindest eine Messaufnehmer in der Messnabe integriert ist und die Messnabe aus einem im wesentlichen zylindrischen Hauptkörper mit einer Mantelfläche, an welcher der Messaufnehmer angebracht ist, und mit zwei sich gegenüberliegenden Stirnseiten besteht, wobei die Messnabe mit einem eigenen Spannfutter zur Aufnahme eines Werkzeugs ausgebildet ist, welches als internes Spannfutter an einer der Stirnseiten des Hauptkörpers angeordnet ist, und wobei an der gegenüberliegenden Stirnseite ein in das Spannfutter der Spindel der Werkzeugmaschine einsetzbarer Fortsatz ausgebildet ist.

Das Prinzip der Erfindung besteht also darin, dass die gesuchte Kraft aus den Dehnungen an der Werkzeughalterung bestimmt wird. An der Oberfläche der Halterung entstehen nämlich Dehnungen infolge von Biege- und Torsionsmomenten aus der Kraft an der Werkzeugschneide. Diese Dehnungen werden mittels der/des Dehnungsmessaufnehmer(s) jedoch nicht direkt an der Schneidenhalterung, sprich dem Spannfutter oder der Abtriebsspindel der Werkzeugmaschine erfasst, sondern die Dehnungsmessaufnehmer sind auf einer Messnabe als externes Bauteil aufgebracht. In diese Nabe wird das Werkzeug mit definierter Winkelzuordnung eingesetzt, während die Messnabe ihrerseits vom

Einspannfutter der Werkzeugmaschinenspindel aufgenommen wird. Durch diese Maßnahme lassen sich die folgenden Vorteile erzielen:
- Die momentane Kraft an der Werkzeugschneide kann über die Dehnungserfassung nach Größe und Richtung bestimmt werden.
- Die Messnabe kann für mehrere und unterschiedliche Werkzeuge bzw. Werkzeugmaschinen eingesetzt werden. Hierdurch ergibt sich eine Kosten- und Zeitersparnis.
- Die Maschinendynamik an der Einspannstelle des Werkzeugs wird nicht wesentlich verändert. Die Messgenauigkeit erhöht sich dadurch.
- Die Messnabe erfordert keinen Bauraum und keine störenden Statorteile im Aktionsraum der Maschinenspindel oberhalb der Werkzeug-Spannfutters.

Weitere vorteilhafte Ausgestaltungen der Erfindung sind Gegenstand der Unteransprüche.

Die Erfindung wird nachstehend anhand eines bevorzugten Ausführungsbeispiels unter Bezugnahme auf die begleitende Zeichnung näher erläutert.
Fig. 1 zeigt den prinzipiellen Aufbau einer Messanlage zur Erfassung von Drehmomenten an dem Abtriebsspindel einer Bohrmaschine gemäß dem Stand der Technik und
Fig. 2 zeigt die Seitenansicht eines Spannfutter-integrierten Kraftmesssystems gemäß dem bevorzugten Ausführungsbeispiel der Erfindung.

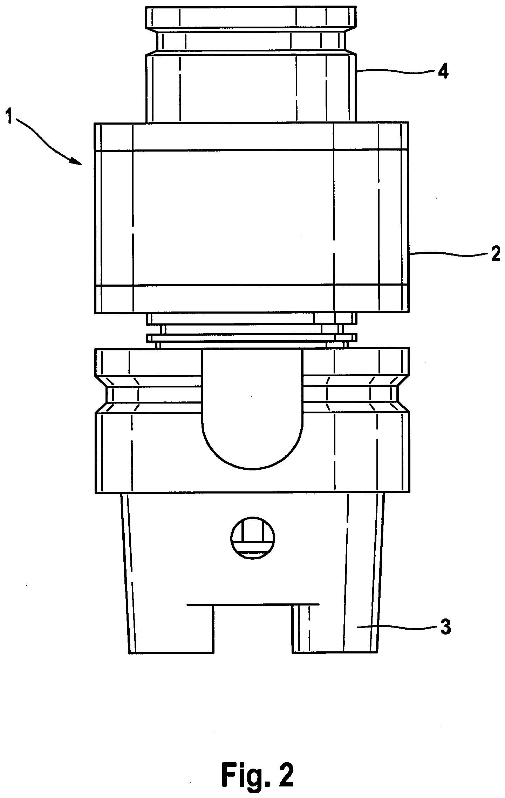

Gemäß der Fig. 2 besteht das Spannfutter-integrierte Kraftmesssystem der vorliegenden Erfindung aus einer Messnabe 1, die mit einer Anzahl von Dehnungs-Messaufnehmern (nicht im einzelnen dargestellt) ausgerüstet ist. Die Messnabe 1 besteht dabei aus einem im wesentlichen zylindrischen Hauptkörper 2, an dessen Mantelfläche die DehnungsMessaufnehmer angebracht sind. An den sich gegenüberliegenden Stirnseiten des Hauptkörpers 2 ist zum Einen ein internes Spannfutter 3 zur Aufnahme eines rotierenden Werkzeugs beispielsweise eines Bohrers oder Fräsers (nicht gezeigt) angeordnet und zum Anderen ein Einsatzstück in Form eines zylindrischen Fortsatzes 4 ausgebildet, welches in das Spannfutter einer Werkzeugmaschinenspindel einsetzbar ist. Die Messnabe 1 bildet somit ein Adapter- bzw. Zwischenstück, das in den Drehmomenten- bzw. Kräftezug der Werkzeugmaschine auf das Werkzeug zwischengefügt wird.

Im Hauptkörper 2 der Messnabe 1 sind gemäß dem bevorzugten Ausführungsbeispiel der Erfindung eine Messwert-Übertragungsvorrichtung sowie eine interne Energieversorgung in Form einer Batterie untergebracht. Die Messwert-Übertragungsvorrichtung umfasst eine elektrische Schaltung zur Vorverarbeitung der von den Messaufnehmern abgegebenen Signale sowie einen Transponder zur Funk-Übermittlung der vorverarbeiteten Signale an eine stationäre Signalverarbeitungsstation. Alternativ zu der internen Energieversorgung ist es aber auch möglich, die elektrische Energie induktiv durch eine entsprechende Anordnung einer Induktionsspule in die rotierende Nabe 1 einzukoppeln. In diesem Fall ist ein Statorteil nahe der Messnabe 1 erforderlich, das mit einer entsprechenden Induktionsspule ausgerüstet ist.

Insgesamt ist die Messnabe 1 in ihrer Massenverteilung und Steifigkeit derart gestaltet, dass die Gesamtsteifigkeit des Antriebsstrangs der Maschinenspindel nicht wesentlich verändert wird. Hierdurch können Messfehler weitgehend unterdrückt werden.

Die Signalverarbeitungsstation, welche in der Fig. 2 nicht dargestellt ist, weist einen Empfänger auf, der die von der Messnabe 1 ausgesandten Dehnungs-Messsignale auffängt. Darüber hinaus wird die Signalverarbeitungsstation an die Maschinensteuerung und insbesondere die Drehzahlregelung der Werkzeugmaschine angeschlossen, um so Informationen zur Winkellage des maschineninternen Spannfutters zu erhalten. Alternativ oder zusätzlich kann aber auch zumindest ein Permanent- oder Pulssignalgeber in der Messnabe 1 vorzugsweise auf deren Umfang angebracht sein, dessen Signal bei maximaler Annäherung an einen ortsfesten Aufnehmer von diesem erfasst wird. Die Anzahl der Signalgeber richtet sich dabei danach, welche zeitlichen Änderungen der Kraft im raumfesten System erfasst werden sollen.

Grundsätzlich stehen die gemessenen Dehnungen in einem komplexen funktionalen Zusammenhang mit der augenblicklichen Schneidkraft und können durch ein Gleichungssystem beschrieben und entsprechend bestimmt werden. Allerdings ist die Lösung dieser Gleichung nicht ohne weiteres eindeutig.

Eine Kraft, die im raumfesten Koordinatensystem nach Größe und Lage konstant auf die Werkzeugschneide einwirkt, tritt aufgrund der Drehung des Werkzeugs an jedem möglichen Messort auf dem Werkzeug bez. der mitdrehenden Werkzeughalterung (in diesem Fall die Messnabe) als periodisch sich ändernde Größe mit vorerst unbekannter Zuordnung zu einer raumfesten Winkelposition auf. Bei raumfest nicht konstanter Kraft überlagert sich am Werkzeug diese Änderung der genannten periodischen Zeitfunktion zusätzlich.

Um daher eine eindeutige Lösung der vorstehenden Gleichung zu erhalten, muss die momentane Drehwinkellage der Spindel mit einer bestimmten Taktrate definiert werden, welche auf den interessierenden Frequenzbereich der Kraft abgestimmt ist. Zu diesem Zweck werden die genannten Signalgeber über den Umfang der Messnabe in entsprechend vorbestimmten Winkelabständen verteilt und/oder die ausgewählten Winkellagen aus der Maschinensteuerung ausgelesen.

Das Gleichungssystem, das für die gesuchte resultierende Kraft formuliert werden kann, ist jedoch wegen der involvierten Kreisfunktionen nicht linear. Die erforderliche Rechenzeit zur Lösung des nicht linearen Gleichungssystems ist auch unter Einsatz schneller Rechner nach dem derzeitigen Stand der Technik derart lang, dass es nicht in der erforderlichen Weise in quasi-Echtzeit gelöst werden kann. Daher wird zur Bestimmung der Kraft aus den gemessenen Dehnungen ein numerisches Nährungsverfahren angewandt. Vorzugsweise werden hierfür sogenannte simulierte neuronale Netze eingesetzt, wie sie bereits aus dem Stand der Technik bekannt sind. Dabei wird für eine ausreichend große Zahl von Lastfällen der Zusammenhang von Kraft nach Größe und Richtung und der zugehörigen Größe der Messaufnehmersignale in Abhängigkeit von der Winkelposition des Werkzeugs rechnerisch und/oder versuchstechnisch ermittelt. Mit diesen Fällen wird dann ein simuliertes neuronales Netz trainiert. Die Netztopologie wird entsprechend der gewünschten Ergebnisgenauigkeit ausgebildet.

Entsprechend dem allgemein bekannten Ansatz bei simulierten neuronalen Netzen dieser Art werden schließlich in der praktischen Anwendung die von den Dehnungsmessaufnehmern ausgegebenen Signale am Eingang des bereits trainierten Netzes angelegt und die zugehörige Kraft nach Größe und Richtung am Netzausgang abgefragt.

Erst durch den Einsatz simulierter neuronaler Netze wird der größte Teil der erforderlichen Rechenarbeit quasi "offline" vor der praktischen Anwendung durch das Netztraining geleistet. Die Netzabfrage in der praktischen Anwendung erfordert dann dementsprechend eine relativ geringe Rechenleistung. So können veränderliche Kräfte an der Schneide in einem für die Beurteilung des Bohr- oder Fräsprozesses relevanten Frequenzband mit nahezu beliebiger Genauigkeit bestimmt werden.

## Patentansprüche

1. Spannfutter-integriertes Kraftmesssystem zur Bestimmung von Schneidkräften an der Werkzeugschneide eines drehenden Werkzeugs mit zumindest einem Messaufnehmer sowie einer Messwertbearbeitungsstation, wobei der zumindest eine Messaufnehmer ein Dehnungssensor ist, der an einer Werkzeughalterung einer Werkzeugmaschine mit einer drehenden Spindel platzierbar ist, und mit einer Messnabe (1), die als ein Adapterstück in ein Spannfutter der Spindel der Werkzeugmaschine einsetzbar ist, wobei der zumindest eine Messaufnehmer in der Messnabe integriert ist, **dadurch gekennzeichnet, dass** die Messnabe (1) aus einem im wesentlichen zylindrischen Hauptkörper (2) mit einer Mantelfläche, an welcher der Messaufnehmer angebracht ist, und mit zwei sich gegenüberliegenden Stirnseiten besteht, dass die Messnabe (1) mit einem eigenen Spannfutter (3) zur Aufnahme eines Werkzeugs ausgebildet ist, welches als internes Spannfutter (3) an einer der Stirnseiten des Hauptkörpers (2) angeordnet ist, und dass an der gegenüberliegenden Stirnseite ein in das Spannfutter der Spindel der Werkzeugmaschine einsetzbarer Fortsatz (4) ausgebildet ist.

2. Spannfutter-integriertes Kraftmesssystem nach Anspruch 1, **dadurch gekennzeichnet, dass** der zumindest eine Messaufnehmer an der Oberfläche der Messnabe (1) angebracht ist zur Erfassung von Oberflächendehnungen infolge von Biege- und Torsionsmomenten resultierend aus den Schneidkräften an der Werkzeugschneide.

3. Spannfutter-integriertes Kraftmesssystem nach einem der Ansprüche 1 und 2, **gekennzeichnet durch** einen Messnaben integrierten Sender zur Übertragung von Messsignalen an einen stationären Empfänger der Messwertbearbeitungsstation.

4. Spannfutter-integriertes Kraftmesssystem nach Anspruch 3, **gekennzeichnet durch** eine Messnaben-integrierte Energieversorgung für den zumindest einen Messaufnehmer und den Sender vorzugsweise in Form einer Batterie.

5. Spannfutter-integriertes Kraftmesssystem nach Anspruch 3, **gekennzeichnet durch** eine stationäre Induktionsspule, welche die Messnabe (1) zur induktiven Einkopplung der elektrischen Energie in die rotierende Nabe (1) umgibt.

6. Spannfutter-integriertes Kraftmesssystem nach einem der vorstehenden Ansprüche, **dadurch gekennzeichnet, dass** die Messwertbearbeitungsstation an die Maschinensteuerung zum Abgreifen der aktuellen Drehzahl und/oder Winkelposition des Werkzeugs anschliessbar ist.

7. Spannfutter-integriertes Kraftmesssystem nach einem der vorstehenden Ansprüche, **gekennzeichnet durch** mindestens einen Signalgeber am Umfang der Messnabe (1) sowie einen Stator zum Empfangen der Signale des Signalgebers und zur Bestimmung der Messnabendrehzahl und/oder Winkelposition auf Basis der empfangenen Signale.

## Claims

1. Chuck-integrated force-measuring system for determining cutting forces at the cutting edge of a rotating tool having at least one measuring sensor as well as a measurement processing station, wherein the at least one measuring sensor is a strain sensor which can be located on a tool holder of a machine tool with a rotating spindle, and having a measuring hub (1) which can be inserted as an adapter piece in a chuck of the spindle of the machine tool, wherein the at least one measuring sensor is integrated in the measuring hub, **characterised in that** the measuring hub (1) consists of a substantially cylindrical main body (2) having a shell surface on which the measuring sensor is mounted, and having two mutually opposed end faces, **in that** the measuring hub (1) is formed with its own chuck (3) for receiving a tool which is arranged as an internal chuck (3) on one of the end faces of the main body (2), and **in that** at the opposite end face is formed an extension (4) which can be inserted in the chuck of the spindle of the machine tool.

2. Chuck-integrated force-measuring system according to claim 1, **characterised in that** the at least one measuring sensor is mounted on the surface of the measuring hub (1) for detecting surface strain as a result of bending moments and torques resulting from the cutting forces at the cutting edge of the tool.

3. Chuck-integrated force-measuring system according to one of claims 1 and 2, **characterised by** a transmitter integrated in the measuring hub for transmitting measurement signals to a stationary receiver of the measurement processing station.

4. Chuck-integrated force-measuring system according to claim 3, **characterised by** a power supply integrated in the measuring hub for the at least one measuring sensor and the transmitter preferably in the form of a battery.

5. Chuck-integrated force-measuring system according to claim 3, **characterised by** a stationary induction coil which surrounds the measuring hub (1) for inductive supply of electrical energy to the rotating hub (1).

6. Chuck-integrated force-measuring system according to one of the preceding claims, **characterised in that** the measurement processing station can be connected to the machine control for measuring the current speed and/or angular position of the tool.

7. Chuck-integrated force-measuring system according to one of the preceding claims, **characterised by** at least one signal transmitter at the circumference of the measuring hub (1) as well as a stator for receiving the signals of the signal transmitter and for determining the measuring hub speed and/or angular position on the basis of the signals received.

## Revendications

1. Système de mesure de force intégré au mandrin de serrage servant à déterminer des forces de coupe au niveau de la lame coupante d'outil d'un outil qui tourne, comprenant au moins une sonde de mesure ainsi qu'une station de traitement de valeurs de mesure, dans lequel l'au moins une sonde de mesure est un capteur d'allongement, qui peut être placé au niveau d'un porte-outil d'une machine-outil avec une broche qui tourne, et comprenant un moyeu de mesure (1), qui peut être inséré, sous la forme d'une pièce d'adaptation, dans un mandrin de serrage de la broche de la machine-outil, dans lequel l'au moins une sonde de mesure est intégrée dans le moyeu de mesure, **caractérisé en ce que** le moyeu de mesure (1) est constitué par un corps principal (2) sensiblement cylindrique avec une surface enveloppe, au niveau de laquelle la sonde de mesure est installée, et avec deux côtés frontaux se faisant face, que le moyeu de mesure (1) est réalisé avec un mandrin de serrage (3) propre servant à recevoir un outil qui est agencé comme mandrin de serrage (3) interne au niveau d'un des côtés frontaux du corps principal (2), et qu'un appendice (4) pouvant être inséré dans le mandrin de serrage de la broche de la machine-outil est réalisé au niveau du côté frontal opposé.

2. Système de mesure de force intégré au mandrin de serrage selon la revendication 1, **caractérisé en ce que** l'au moins une sonde de mesure est installée au niveau de la surface du moyeu de mesure (1) afin de détecter des allongements de surface suite à des couples de flexion et de torsion résultant des forces de coupes au niveau de la lame tranchante d'outil.

3. Système de mesure de force intégré au mandrin de serrage selon l'une quelconque des revendications 1 et 2, **caractérisé par** un émetteur intégré dans le moyeu de mesure servant à transmettre des signaux de mesure à un récepteur stationnaire de la station de traitement des valeurs de mesure.

4. Système de mesure de force intégré au mandrin de serrage selon la revendication 3, **caractérisé par** une alimentation en énergie intégrée dans le moyeu de mesure pour l'au moins une sonde de mesure et l'émetteur se présentant de préférence sous la forme d'une batterie.

5. Système de mesure de force intégré au mandrin de serrage selon la revendication 3, **caractérisé par** une bobine à induction stationnaire, laquelle entoure le moyeu de mesure (1) pour l'injection par induction de l'énergie électrique dans le moyeu (1) en rotation.

6. Système de mesure de force intégré au mandrin de serrage selon l'une quelconque des revendications précédentes, **caractérisé en ce que** la station de traitement des valeurs de mesure peut être raccordée à la commande de machine afin de relever la vitesse de rotation effective et/ou la position angulaire de l'outil.

7. Système de mesure de force intégré au mandrin de serrage selon l'une quelconque des revendications précédentes, **caractérisé par** au moins un transmetteur de signaux au niveau de la périphérie du moyeu de mesure (1) ainsi que par un stator servant à recevoir les signaux du transmetteur de signaux et servant à déterminer la vitesse de rotation de moyeu de mesure et/ou la position angulaire sur la base des signaux reçus.
